# EUROPEAN PATENT SPECIFICATION

(11) **EP 3 209 944 B1**
(45) Date of publication and mention of the grant of the patent: **01.05.2019**
(21) Application number: 14798722.6
(22) Date of filing: 23.10.2014
(51) Int. Cl.: F24H 9/02, F24D 13/02, F24C 7/04

(54) **PANEL HEATER AND METHOD FOR ASSEMBLING SUCH A PANEL HEATER**
FLÄCHENHEIZKÖRPER UND VERFAHREN ZUR MONTAGE SOLCH EINES FLÄCHENHEIZKÖRPERS
PANNEAU CHAUFFANT ET MÉTHODE D'ASSEMBLAGE D'UN TEL PANNEAU CHAUFFANT

(43) Date of publication of application: 30.08.2017
(73) Proprietor: De Mos, L. J., 3245 BH Sommelsdijk (NL)
(72) Inventor: De Mos, L. J., 3245 BH Sommelsdijk (NL)
(74) Representative: Pronovem
(86) International application number: PCT/EP2014/072801
(87) International publication number: WO 2016/062347

(56) References cited:
- EP-A1- 0 176 478
- WO-A1-2012/028194
- DE-A1- 2 222 322
- FR-A1- 2 551 847
- US-A- 3 062 945

## Description

### Field of the invention

The invention is related to panel heaters arranged to produce heat by radiation emanating from a heated panel surface.

### State of the art.

Panel heaters are known in the art as mostly electrically powered heating devices, wherein a flat panel is heated so that it produces radiant heat to the environment. The efficiency of these devices is dependent on a number of factors, such as the thermal contact between the heat-emitting panel and the heat source, the thermal insulation, the type of heat source, etc. It is known to mount the panel in a pre-stressed condition, as illustrated in WO2012/028194, to improve the thermal contact. In the latter design, the radiant panel is mounted under stress in the housing of the panel heater. Under these conditions however, the stress of the panel is difficult to control and highly dependent on the mounting procedure. Removing and replacing the panel is also a cumbersome operation which increases the risk of incorrect mounting with inefficient operation as a consequence.

Documents FR2551847 A1 and US3062945 A1 represent further state of the art relevant for the invention.

In general, panel heaters are open to improvement in terms of the heat efficiency and the ΔT coefficient, which is the temperature difference between the radiant surface of the panel and the back of the heater.

### Summary of the invention

The present invention aims to answer to the above deficiencies of prior art panel heaters. The invention is related to a heater as disclosed in the appended claims.

In a heater according to the invention, a heat-radiating panel is part of a planar package comprising, besides the panel, a heat source and preferably a thermal insulation means, wherein said package is held in place along two opposite edges of the package, by a number of brackets which run transversally from one edge of the package to an opposite edge, along the back side of the package. The brackets are removably mounted in the housing of the heater. In this way, the package can be easily installed and removed from the housing. In the preferred embodiment of the invention, the panel is mounted under a pre-stress with respect to the brackets by the fact that the mounting of the edges of the panel into the brackets imposes a concave curvature on the panel, the curve running from one edge to the opposite edge. The fact that the panel is mounted in the brackets instead of the housing makes it possible to mount the panel under a well-defined pre-stress that is not dependent on the housing as such.

The invention is thus firstly related to a panel heater comprising :
- a housing,
- a panel having a front heat-radiating surface (i.e. a surface configured to produce heat by radiation) and a back surface and
- a heat source in thermal contact (i.e. configured to transfer its heat to the back surface of the panel) with the back surface of the panel,
the panel and heat source forming a package having opposite side edges, wherein said package is held by at least two brackets, each bracket having :
- a longitudinal body running from one edge to the opposite edge of the package, and
- a pair of lateral portions configured to grip or retain the respective edges of the package,
and wherein the brackets are removably mounted in the housing.

According to the invention, the package is maintained by said lateral portions so as to be in a stressed condition with respect to the brackets when the panel is heated, as a consequence of thermal expansion of the panel with respect to the brackets. According to an embodiment, the package is maintained by said lateral portions so as to be in a pre-stressed condition with respect to the brackets when the panel is not heated. According to the invention, the package has a concave heat-emitting surface. The package preferably further comprises at least one layer of thermal insulation material in contact with the heat source.

According to an embodiment, the package comprises retaining wires mounted between said edges for maintaining the layer or layers of thermal insulation material in place with respect to the panel. Said retaining wires may comprise spring portions.

According to a preferred embodiment, the package is provided with lateral strips configured to hold at least the panel and the heat source together along said opposite edges, wherein said lateral strips are retained or gripped by the lateral portions of the brackets.

According to one embodiment, heat source comprises a number of electrical conductors running essentially parallel to said edges, and a heat spreading plate in contact with said conductors and with said panel. According to another embodiment, the heat source comprises a flexible heat-producing sheet.

The housing may at least comprise two lateral flanges wherein the lateral portions of the brackets are mounted in said lateral flanges. According to a preferred embodiment, each of said lateral flanges is provided with a recess, wherein the lateral portions of the brackets are provided with extensions, and wherein the extensions are fitted into said recesses, and wherein no physical contact occurs between the lateral portions of the brackets and the flanges, other than by said fitting of the extensions into the recesses.

According to an embodiment, the brackets are formed of plate metal, the longitudinal portion of the brackets comprising a first and second half, each half comprising a portion that is perpendicular to the panel and a bent reinforcing portion.

According to an embodiment, the housing comprises a back panel formed of a panel of corrugated metal attached to a flat metal plate, and wherein said back panel is fitted into the housing in such a way that air is trapped in the areas between the corrugations and the flat metal plate.

The invention is equally related to a method of assembling a heater according to the invention, comprising the steps of :
- assembling a package comprising at least a heat-emitting panel and a heat source, wherein the panel and thereby the package is naturally curved so as to have a concave surface,
- bending the concave surface backwards and placing the edges of the package in the lateral retaining portions of a number of brackets,
- pushing the package in the direction of the longitudinal body of the brackets until the package snaps into place,
- mounting the package into the housing by connecting the brackets to said housing.

### Brief description of the figures

Figures 1a and 1b illustrate the backside and the front side of a package comprising a heating panel, a heating source and thermal insulation material, held by three brackets, according to a first embodiment of the invention.
Figure 2 shows a side view of the package illustrated in Figure 1.
Figures 3a and 3b show back and front sides of a package according to a second embodiment.
Figure 4 shows a side view of the package illustrated in Figure 3.
Figure 5 shows a package mounted in a heater housing, the package comprising a set of conductors and a heat spreading sheet as the heat source.
Figure 6 illustrates the components of the housing as such.
Figure 7 illustrates a package mounted in a housing the package comprising a flexible heat-producing sheet as the heat source.

### Detailed description of embodiments according to the invention

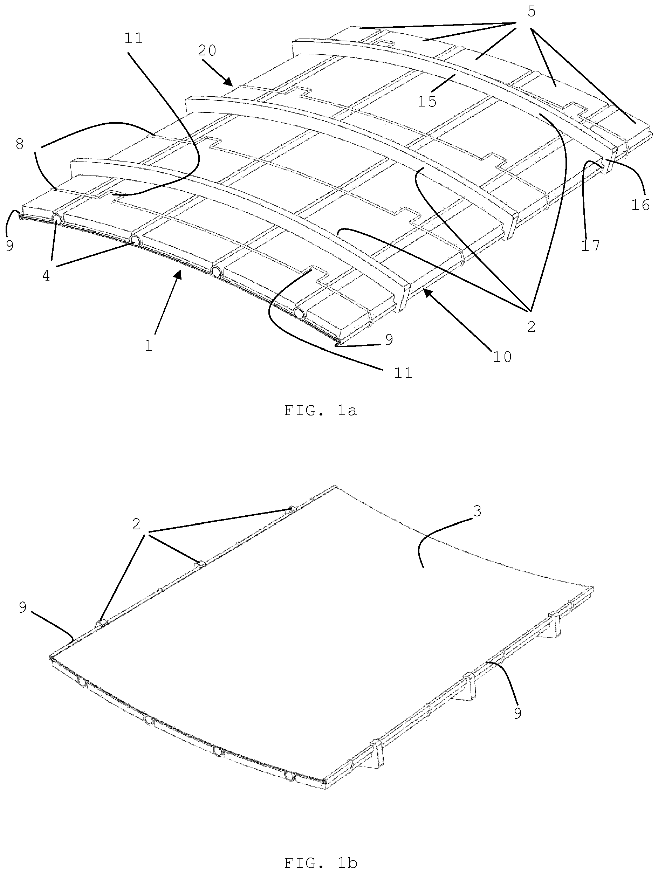

A number of embodiments of the heater according to the invention are described hereafter. These embodiments do not define the scope of the present invention which is defined only by the appended claims. Figures 1a and 1b illustrate a first embodiment, showing the package 1 mounted in three parallel brackets 2. Figures 1a and 1b respectively show the back and front side of the package, the front side being the heat-emitting side. The brackets 2 run along the back surface of the package, from one side edge 10 of the package to the opposite side edge 20.

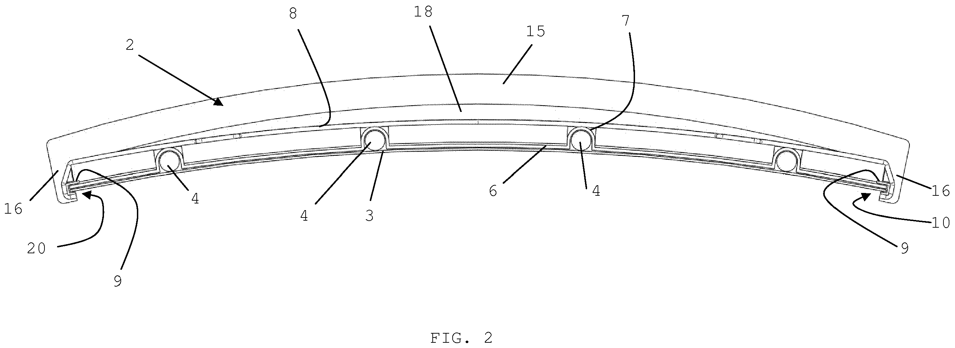

The package in this case comprises a concave heat-emitting panel 3, a heat source comprising electrical conductors 4, and layers 5 of thermal insulation material in between the conductors 4. The more detailed side view of Figure 2 shows that the heat source comprises a thermally conductive heat spreading plate 6 that is in thermal contact with the back surface of the panel 3, said plate 6 having curved portions 7 that fit around the conductors 4 so as to firmly hold the conductors themselves against the panel's back surface. The layers of thermal insulation material 5 are placed in between these curved portions 7. Transversal retaining wires 8 are provided to maintain the thermal insulation material in place with respect to the panel 3 and the heat source 4/6. These wires 8 preferably act at the same time as springs mounted between the edges 10 and 20, which may be achieved by shaping the wires so that they include spring portions 11 along their length. The spring action results in an increase of the pressure by which the heat source 4/6 is pushed against the panel 3, as the panel expands as a consequence of the heating (see further). Lateral strips 9 are provided along the edges 10 and 20, which maintain the edges of the panel 3 and the heat spreading plate 6 firmly together.

As seen in Figure 2, the brackets 2 have a longitudinal body 15 running transversally from one edge 10 to the opposite edge 20 of the package, and lateral retaining portions 16. The retaining portions are configured to retain or grip the side edges 10/20 of the package, in such a way that the package may be stressed with respect to the brackets. In other words, the concave curvature of the package is more pronounced when the package is mounted in the brackets than when the package is in the unrestrained condition (i.e. when the panel is not mounted in the brackets). This stress ensures a good thermal contact between the panel 3 and the heat source 4/6, compared to a non-stressed condition. The stressed condition of the panel with respect to the brackets occurs at least during operation of the heater, i.e. when the panel 3 is heated, due to thermal expansion of the panel 3 with respect to the brackets 2. When the panel is not heated, the panel is preferably, but not necessarily, already pre-stressed with respect to the brackets, by suitable dimensioning of the panel and the brackets. The material of the panel and the brackets are chosen such that a thermal expansion of the panel takes place with respect to the brackets (i.e. the panel expands more than the brackets), in the normal temperature range of the panel's operation.

In the embodiments shown in the drawings, the lateral retaining portions 16 of the brackets are protruding forward from the body 15 of the brackets and are provided with a recess 17 into which the strips 9 are fitted. The longitudinal body 15 of the brackets may have a concave shape that is similar to the panel 3 itself. Preferably (as in the case shown in Figure 2), an open space 18 is present between the package and the brackets, when the heater is not in operation (i.e. the panel 3 is cold). This open space allows for the deformation of the heating panel due to thermal expansion during operation of the heater. The thermal expansion will cause the concave curvature to become more pronounced, i.e. the space 18 becomes smaller as the panel heats up. When the wires 8 are executed with spring portions 11, the spring action pushes the heat source more firmly against the panel as the panel expands due to such thermal expansion. In other words, the springs 8/11 act to increase the thermal efficiency and ΔT of the heater as the panel heats up.

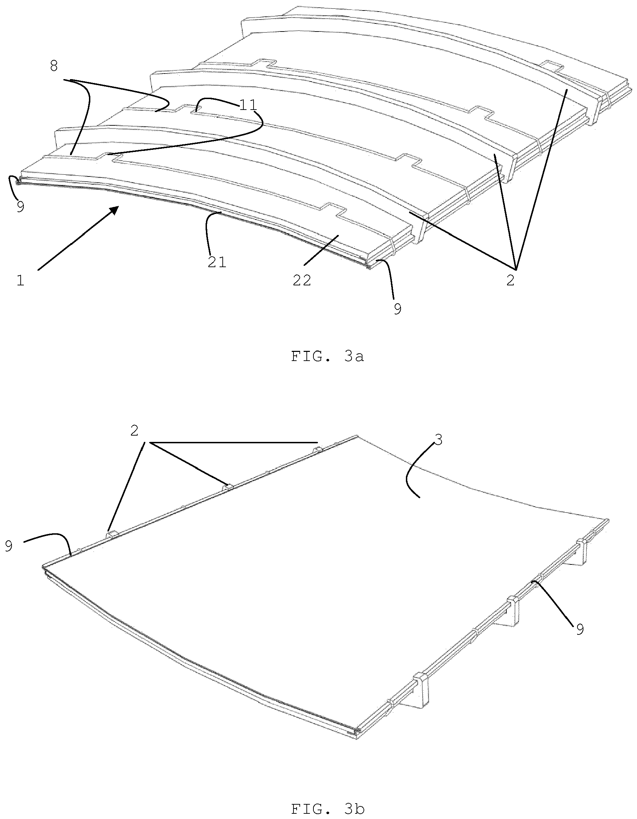

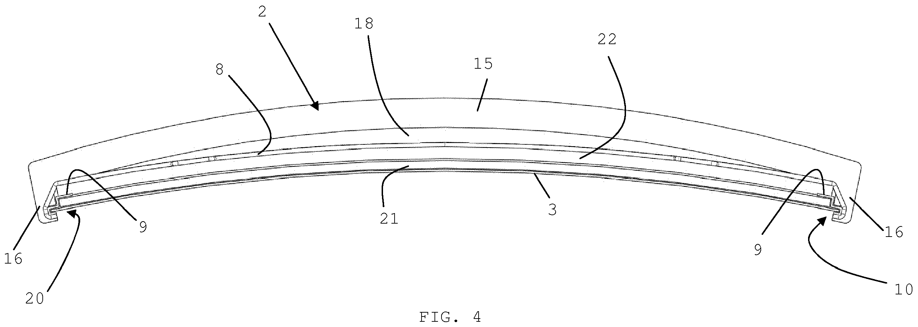

In a second embodiment illustrated in Figures 3 and 4, the panel 3 and the brackets 2 are the same as in the first embodiment, but the heat source is a flexible sheet 21 of heat-producing material, for example a material known in the art comprising one or more resistors wound around a mica foil and maintained between further mica foils and between a front and back retaining layer, and sealed by a layer of silicone. A material of this type is for example obtainable from the manufacturer Tempsens Instruments. This type of heat source provides for a better contact with the panel's back surface and thus an improved efficiency of the heater. The insulation in this case is a continuous sheet 22 of thermal insulation material covering the back surface of the heat source 21. The retaining springs 8/11 and the lateral strips 9 have the same function as in the first embodiment.

In any embodiment of the invention, the material of the panel 3 is preferably steel with a ceramic layer on the front surface (i.e. the heat-emitting surface) or on both the front and back surfaces. The brackets 2 are preferably produced from stainless steel. The lateral strips 9 are equally preferably stainless steel. The stainless steel is preferred because of its low thermal conductance, leading to low heat losses through the brackets. A suitable thermal insulation material 5 is a flexible blanket formed of silica-aerogel, with a thickness of for example 20 mm. This type of material is known in the art and obtainable for example under the name Pyrogel® XT-E from Aspen Aerogels®. The wire springs 8 can be produced from stainless steel, for example from INOX302.

In any of the embodiments described above, electrical connection means must be provided for providing power to the heat source when the heater is powered through an electrical network. In the embodiment of Figure 1, the conductors need to be interconnected so as to form one or more electrical circuits, by interconnecting all the conductors 4 or by interconnecting the conductors in groups of two or more. This is considered to be clear to the skilled reader and therefore not explained here in detail. Instead of electrical heating means, other heat sources could be used. For example, the conductors 4 in the embodiment of Figure 1 could be replaced by hollow tubes through which a heated fluid can flow, thereby transferring its heat to the heat spreading plate and the panel.

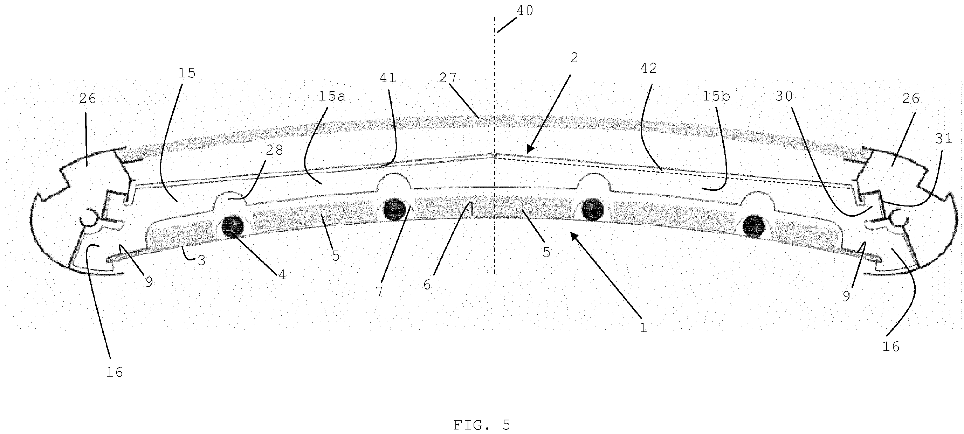

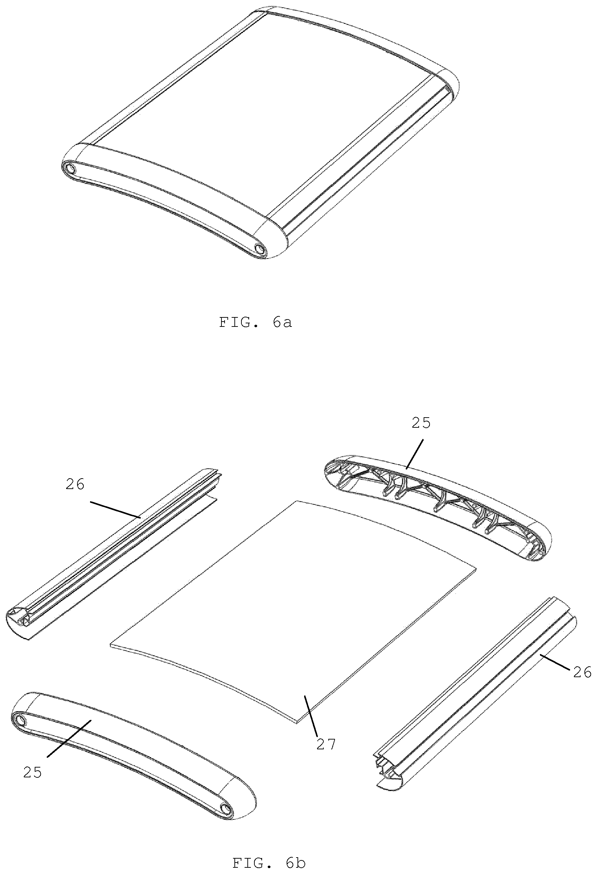

Figure 5 illustrates an assembled heater according to the invention, with a heating package 1 comprising heat conductors 4 and a heat spreading plate 6 in the manner explained above, mounted in the housing. As shown in Figure 6, the housing comprises lateral flanges on all four sides of the panel : two concave-curved flanges 25 and two straight flanges 26. The material of the flanges 25/26 is preferably aluminium. A back panel 27 is provided, fitted between the flanges. According to a preferred embodiment, this back panel 27 is formed of a corrugated aluminium panel bonded to a flat aluminium plate. This material is available under the name Metawell®Aluflex from Metawell GmbH. The back panel is mounted between the straight flanges 26, with the corrugations parallel to the direction of the brackets 2, in such a way that the areas between the corrugations and the flat plate are sealed off. Air trapped in these areas acts as a heat insulator, thereby improving the thermal efficiency and ΔT of the heater.

The lateral portions 16 of the brackets 2 are mounted in two opposite straight flanges 26. In the embodiment shown in Figure 5, the brackets 2 have a longitudinal body 15 and lateral portions 16 that are shaped somewhat differently than in the previously shown embodiments. The longitudinal body 15 is provided with recesses 28 that correspond to the locations of the conductors 4, for allowing the curved portions 7 of the heat-spreading plate 6 to enter into those recesses 28 when the heat emitting panel 3 expands due to thermal expansion. Here, the lateral portions 16 of the brackets have extensions 30 which fit into corresponding recesses 31 in the flanges 26. The contact between the brackets 2 and the flanges 26 is limited to these small areas 30/31, which decreases to a minimum the heat loss from the package to the housing. The brackets 2 in this embodiment are furthermore formed of thin plate steel, for example 2 mm thick, so that the contact area between the bracket's extensions 30 and the recesses 31 of the housing are minimized to a thin surface area perpendicular to the plane of the drawing in Figure 5. The longitudinal portion 15 of the brackets is reinforced in the following way : with respect to the central axis 40 of the bracket, the longitudinal portion comprises a left half and a right half, 15a and 15b respectively. Each half comprises a first plate portion that is perpendicular to the heating panel 3 (i.e. the portions on either side of the central axis 40 that are in the plane of the drawing) and a second plate portion (41 and 42 respectively) that is bent at an angle, preferably at a right angle, with respect to the first plate portion. In this way, the bracket 15 obtains sufficiently high bending strength, despite the fact that the bracket is produced from thin plate material.

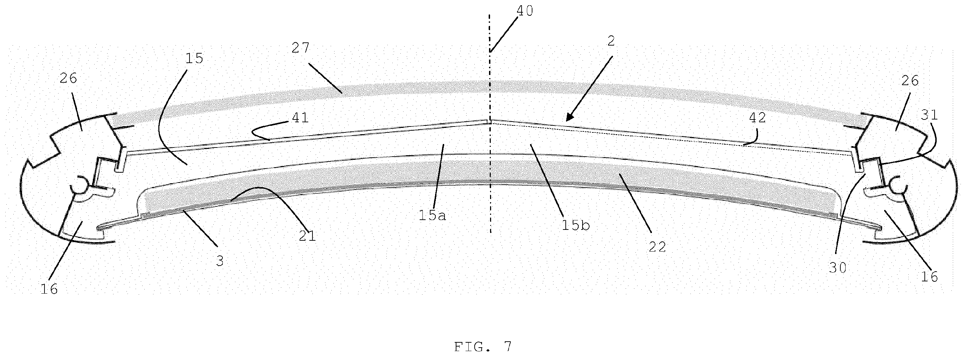

Figure 7 shows an assembled heater wherein the heat source is a flexible heat producing sheet 21 in the manner described above, and again with brackets 15 made of plate steel. In this embodiment, the brackets need not be provided with recesses 28. The reinforcing plate portions 41/42 are equally present.

According to a preferred embodiment, the emitting panel 3 is produced as a steel sheet with a ceramic multilayer on at least one side of the steel sheet. According to a further preferred embodiment, the multilayer (s) is (are) designed in such a way that a pre-curvature of the panel is obtained when the multilayer(s) are applied to the panel. The pre-curvature is such that the panel already has a concave curvature with the same orientation as when the panel is mounted in the heater. However the panel is at the same time flexible enough to bend it in the opposite direction. This makes it possible to bend the package consisting of the panel, the heat source and the thermal insulation (held in place by the springs 8/11), backwards and place the edges in the lateral retaining portions 16/17 of the brackets, and subsequently push the package into the brackets. When the panel snaps back to its natural concave shape, it is thereby firmly fitted into the brackets. The size of the brackets 2 is configured so that when the package snaps into position, it is immediately under the desired pre-stress.

By way of example, the above-described assembly method can be applied by producing the heat-emitting panel 3 as follows. On a steel plate of 0.56mm in thickness, one or more ground coat enamel layers are deposited on the backside of the plate and on the front side of the plate. A ground coat enamel may be any suitable type of enamel used as the base layer in known enamelling processes. On the front side, the heat-emitting side, a top enamel layer is deposited that has a high degree of elasticity, which reduces the chances of cracks appearing in the enamel when the panel expands and shrinks as a consequence of the temperature changes. The total thickness of the ground coat enamel layers on the backside must be higher than the thickness of the ground coat enamel layers on the front side, for the desired pre-curvature to appear. For example, the backside may be provided with a two layers of ground coat enamel of 35micron and 65micron respectively, resulting in a total of 100micron. The front side has a layer of 35micron of ground coat enamel with a 60micron layer of elastic enamel on top of the ground coat. The higher thickness of the ground coat enamel on the backside leads to the desired pre-curvature. The thickness of the steel plate and the various enamel layers leads to a panel 3 that can be built together with a heat source 4/6 or 21 as explained above, and mounted into the brackets by the snap-back method equally explained above.

Especially when a number of the above described features are combined in the same heater, the heater of the invention is capable of operating with a ΔT value that is higher than presently known in similar heater types.

## Claims

1. A panel heater comprising :
• a housing (25,26,27),
• a panel (3) having a front heat-radiating surface and a back surface and
• a heat source (4,6,21) in thermal contact with the back surface of the panel,
the panel and heat source forming a package (1) having opposite side edges (10,20), wherein said package is held by at least two brackets (2), **characterized by** each bracket having :
• a longitudinal body (15) running from one edge (10) to the opposite edge (20) of the package, and
• a pair of lateral portions (16) configured to grip or retain the respective edges (10,20) of the package,
and wherein :
- the brackets (2) are removably mounted in the housing,
- the package (1) has a concave curvature between the opposite side edges (10,20) gripped by the brackets, so that the package (1) has a concave heat-emitting surface,
- the material of the panel (3) and the brackets (2) are chosen such that a thermal expansion of the panel (3) takes place with respect to the brackets (2),
- the package (1) is maintained by said lateral portions (16) so as to be in a stressed condition with respect to the brackets when the panel is heated, as a consequence of thermal expansion of the panel with respect to the brackets (2),
- the package (1) is configured so that the stressed condition improves the thermal contact between the panel (3) and the heat source (4,6,21) compared to the non-stressed condition.

2. Heater according to claim 1, wherein the package (1) is maintained by said lateral portions (16) so as to be in a pre-stressed condition with respect to the brackets (2) when the panel is not heated.

3. Heater according to any one of the preceding claims, wherein the package (1) further comprises at least one layer (5,22) of thermal insulation material in contact with the heat source (4,6,21).

4. Heater according to claim 3, wherein the package comprises retaining wires (8) mounted between said edges (10,20) for maintaining the layer or layers (5) of thermal insulation material in place with respect to the panel (3).

5. Heater according to claim 4, wherein said retaining wires (8) comprise spring portions (11).

6. Heater according to any one of the preceding claims, wherein the package (1) is provided with lateral strips (9) configured to hold at least the panel (3) and the heat source (4,6,21) together along said opposite edges (10,20), and wherein said lateral strips (9) are retained or gripped by the lateral portions (16) of the brackets (2).

7. Heater according to any one of the preceding claims, wherein the heat source comprises a number of electrical conductors (4) running essentially parallel to said edges (10,20), and a heat spreading plate (6) in contact with said conductors (4) and with said panel (3).

8. Heater according to any one of claims 1 to 6, wherein the heat source comprises a flexible heat-producing sheet (21).

9. Heater according to any one of the preceding claims, wherein the housing comprises at least two lateral flanges (26) and wherein the lateral portions (16) of the brackets (2) are mounted in said lateral flanges.

10. Heater according to claim 9, wherein each of said lateral flanges (26) is provided with a recess (31), and wherein the lateral portions (16) of the brackets are provided with extensions (30), and wherein the extensions (30) are fitted into said recesses (31), and wherein no physical contact occurs between the lateral portions (16) of the brackets and the flanges (26), other than by said fitting of the extensions (30) into the recesses (31).

11. Heater according to any one of the preceding claims, wherein the brackets (2) are formed of plate metal, the longitudinal portion (15) of the brackets comprising a first and second half (15a, 15b), each half comprising a portion that is perpendicular to the panel (3) and a bent reinforcing portion (41,42).

12. Heater according to any one of the preceding claims, wherein the housing comprises a back panel (27) formed of a panel of corrugated metal attached to a flat metal plate, and wherein said back panel is fitted into the housing in such a way that air is trapped in the areas between the corrugations and the flat metal plate.

13. Method of assembling a heater according to any one of the preceding claims comprising the steps of :
• assembling a package (1) comprising at least a heat-emitting panel (3) and a heat source (4,6,21), wherein the panel and thereby the package is naturally curved so as to have a concave surface,
• bending the concave surface backwards and placing the edges of the package in the lateral retaining portions of a number of brackets (2),
• pushing the package in the direction of the longitudinal body (15) of the brackets until the package snaps into place,
• mounting the package into the housing by connecting the brackets (2) to said housing.

## Patentansprüche

1. Panelheizvorrichtung, umfassend:
• ein Gehäuse (25, 26, 27),
• ein Panel (3) mit einer Wärme abstrahlenden Vorderfläche und einer Rückfläche und
• eine Wärmequelle (4, 6, 21) in thermischem Kontakt mit der Rückfläche des Panels,
wobei das Panel und die Wärmequelle eine Baugruppe (1) mit gegenüberliegenden Seitenkanten (10, 20) bilden, wobei die besagte Baugruppe durch mindestens zwei Halterungen (2) gehalten wird, **dadurch gekennzeichnet, dass**
jede Halterung aufweist:
• einen Längskörper (15), der von einer Kante (10) zur gegenüberliegenden Kante (20) der Baugruppe verläuft, und
• ein Paar von seitlichen Abschnitten (16), die so ausgelegt sind, dass sie die jeweiligen Kanten (10, 20) der Baugruppe festklemmen oder festhalten, und wobei:
- die Halterungen (2) entfernbar im Gehäuse montiert sind,
- die Baugruppe (1) eine konkave Krümmung zwischen den gegenüberliegenden, von den Halterungen festgeklemmten Seitenkanten (10, 20) aufweist, so dass die Baugruppe (1) eine konkave, Wärme emittierende Oberfläche aufweist,
- das Material des Panels (3) und der Halterungen (2) derart gewählt ist, dass eine Wärmeausdehnung des Panels (3) in Bezug auf die Haltungen (2) stattfindet,
- die Baugruppe (1) durch die besagten seitliche Abschnitte (16) so gehalten wird, dass sie infolge der Wärmeausdehnung des Panels in Bezug auf die Halterungen (2) in einem gespannten Zustand in Bezug auf die Halterungen ist, wenn das Panel (2) erwärmt wird,
- die Baugruppe (1) so ausgelegt ist, dass der gespannte Zustand den thermischen Kontakt zwischen dem Panel (3) und der Wärmequelle (4, 6, 21) gegenüber dem entspannten Zustand verbessert.

2. Heizvorrichtung nach Anspruch 1, wobei die Baugruppe (1) durch die besagten seitliche Abschnitte (16) so gehalten wird, dass sie in einem vorgespannten Zustand in Bezug auf die Halterungen (2) ist, wenn das Panel nicht erwärmt wird.

3. Heizvorrichtung nach irgendeinem der vorhergehenden Ansprüche, wobei die Baugruppe (1) ferner mindestens eine Schicht (5, 22) aus Wärme isolierendem Material in Kontakt mit der Wärmequelle (4, 6, 21) umfasst.

4. Heizvorrichtung nach Anspruch 3, wobei die Baugruppe Haltedrähte (8) umfasst, die zum Instellunghalten der Schicht oder Schichten (5) aus Wärme isolierendem Material in Bezug auf das Panel (3) zwischen den besagten Kanten (10, 20) montiert sind.

5. Heizvorrichtung nach Anspruch 4, wobei die besagten Haltedrähte (8) Federabschnitte (11) umfassen.

6. Heizvorrichtung nach irgendeinem der vorhergehenden Ansprüche, wobei die Baugruppe (1) mit seitlichen Streifen (9) versehen ist, die zum Zusammenhalten wenigstens des Panels (3) und der Wärmequelle (4, 6, 21) entlang besagter gegenüberliegenden Kanten (10, 20) ausgelegt sind, und wobei die besagten seitliche Streifen (9) von den seitlichen Abschnitten (16) der Halterungen (2) festgehalten oder festgeklemmt werden.

7. Heizvorrichtung nach irgendeinem der vorhergehenden Ansprüche, wobei die Wärmequelle eine Anzahl von elektrischen Leitern (4), die im Wesentlichen parallel zu den besagten Kanten (10, 20) verlaufen, und eine Wärmeverteilungsplatte (6) in Kontakt mit den besagten Leitern (4) und mit dem besagten Panel (3) umfasst.

8. Heizvorrichtung nach irgendeinem der Ansprüche 1 bis 6, wobei die Wärmequelle eine flexible, Wärme erzeugende Folie (21) umfasst.

9. Heizvorrichtung nach irgendeinem der vorhergehenden Ansprüche, wobei das Gehäuse mindestens zwei seitliche Flansche (26) umfasst, und wobei die seitlichen Abschnitte (16) der Halterungen (2) in den besagten seitliche Flanschen montiert sind.

10. Heizvorrichtung nach Anspruch 9, wobei jeder der besagten seitliche Flansche (26) mit einer Aussparung (31) versehen ist, und wobei die seitlichen Abschnitte (16) der Halterungen mit Verlängerungen (30) versehen sind, und wobei die Verlängerungen (30) in die besagten Aussparungen (31) eingepasst sind, und wobei kein physischer Kontakt zwischen den seitlichen Abschnitten (16) der Halterungen und den Flanschen (26) außer dem besagten Einpassen der Verlängerungen (30) in die Aussparungen (31) stattfindet.

11. Heizvorrichtung nach irgendeinem der vorhergehenden Ansprüche, wobei die Halterungen (2) aus Plattenmetall gebildet sind, der Längsabschnitt (15) der Halterungen eine erste und eine zweite Hälfte (15a, 15b) umfasst, und jede Hälfte einen Abschnitt, der senkrecht auf das Panel (3) ist, und einen gekrümmten Verstärkungsabschnitt (41, 42) umfasst.

12. Heizvorrichtung nach irgendeinem der vorhergehenden Ansprüche, wobei das Gehäuse ein Rückseitenpanel (27) umfasst, das aus einem Panel aus Wellblech gebildet ist, das an einer flachen Metallplatte angebracht ist, und wobei das besagte Rückseitenpanel derart in das Gehäuse eingepasst ist, dass Luft in den Bereichen zwischen den Wellen und der flachen Metallplatte eingeschlossen wird.

13. Verfahren zur Montage einer Heizvorrichtung nach irgendeinem der vorhergehenden Ansprüche, umfassend die folgenden Schritte:
• Zusammenbauen einer Baugruppe (1), die mindestens ein Wärme emittierendes Panel (3) und eine Wärmequelle (4, 6, 21) umfasst, wobei das Panel und dadurch die Baugruppe auf natürliche Weise so gekrümmt werden, dass sie eine konkave Fläche aufweist,
• Biegen der konkaven Fläche nach hinten und Anordnen der Kanten der Baugruppe in seitlichen Halteabschnitten einer Anzahl von Halterungen (2),
• Stoßen der Baugruppe in der Richtung des Längskörpers (15) der Halterungen, bis die Baugruppe in Stellung einrastet,
• Montieren der Baugruppe im Gehäuse durch Verbinden der Halterungen (2) mit dem besagten Gehäuse.

## Revendications

1. Dispositif de chauffage en forme de panneau comprenant :
un boîtier (25, 26, 27),
un panneau (3) ayant une surface de rayonnement de chaleur avant et une surface arrière, et
une source de chaleur (4, 6, 21) en contact thermique avec la surface arrière du panneau,
le panneau et la source de chaleur formant un ensemble (1) ayant des bords latéraux (10, 20) opposés, dans lequel ledit ensemble est maintenu par au moins deux supports (2), **caractérisé en ce que** chaque support comprend :
un corps longitudinal (15) s'étendant d'un bord (10) au bord opposé (20) de l'ensemble, et
une paire de parties latérales (16) configurées pour saisir ou retenir les bords (10, 20) respectifs de l'ensemble, et dans lequel :
les supports (2) sont montés, de manière amovible, dans le boîtier,
l'ensemble (1) a une courbure concave entre les bords latéraux (10, 20) opposés saisis par les supports, de sorte que l'ensemble (1) a une surface d'émission de chaleur concave,
les matériaux du panneau (3) et des supports (2) sont choisis de sorte qu'une expansion thermique du panneau (3) a lieu par rapport aux supports (2),
l'ensemble (1) est maintenu par lesdites parties latérales (16) afin d'être dans une condition de contrainte par rapport aux supports lorsque le panneau est chauffé, en conséquence de l'expansion thermique du panneau par rapport aux supports (2),
l'ensemble (1) est configuré de sorte que la condition de contrainte améliore le contact thermique entre le panneau (3) et la source de chaleur (4, 6, 21) par rapport à la condition non contrainte.

2. Dispositif de chauffage selon la revendication 1, dans lequel l'ensemble (1) est maintenu par lesdites parties latérales (16) afin d'être dans une condition précontrainte par rapport aux supports (2) lorsque le panneau n'est pas chauffé.

3. Dispositif de chauffage selon l'une quelconque des revendications précédentes, dans lequel l'ensemble (1) comprend en outre au moins une couche (5, 22) de matériau d'isolation thermique en contact avec la source de chaleur (4, 6, 21).

4. Dispositif de chauffage selon la revendication 3, dans lequel l'ensemble comprend des fils de retenue (8) montés entre lesdits bords (10, 20) pour maintenir la couche ou les couches (5) de matériau d'isolation thermique en place par rapport au panneau (3).

5. Dispositif de chauffage selon la revendication 4, dans lequel lesdits fils de retenue (8) comprennent des parties de ressort (11).

6. Dispositif de chauffage selon l'une quelconque des revendications précédentes, dans lequel l'ensemble (1) est prévu avec des bandes latérales (9) configurées pour maintenir au moins le panneau (3) et la source de chaleur (4, 6, 21) ensemble le long desdits bords (10, 20) opposés, et dans lequel lesdites bandes latérales (9) sont retenues ou saisies par les parties latérales (16) des supports (2).

7. Dispositif de chauffage selon l'une quelconque des revendications précédentes, dans lequel la source de chaleur comprend un nombre de conducteurs électriques (4) s'étendant de manière essentiellement parallèle auxdits bords (10, 20), et une plaque de diffusion de chaleur (6) en contact avec lesdits conducteurs (4) et avec ledit panneau (3).

8. Dispositif de chauffage selon l'une quelconque des revendications 1 à 6, dans lequel la source de chaleur comprend une feuille de production de chaleur flexible (21).

9. Dispositif de chauffage selon l'une quelconque des revendications précédentes, dans lequel le boîtier comprend au moins deux brides latérales (26) et dans lequel les parties latérales (16) des supports (2) sont montées dans lesdites brides latérales.

10. Dispositif de chauffage selon la revendication 9, dans lequel chacune desdites brides latérales (26) est prévue avec un évidement (31), et dans lequel les parties latérales (16) des supports sont prévues avec des extensions (30), et dans lequel les extensions (30) sont montées dans lesdits évidements (31), et dans lequel aucun contact physique n'a lieu entre les parties latérales (16) des supports et les brides (26) différemment que par ledit montage des extensions (30) dans les évidements (31).

11. Dispositif de chauffage selon l'une quelconque des revendications précédentes, dans lequel les supports (2) sont formés à partir d'une plaque métallique, la partie longitudinale (15) des supports comprenant une première et une seconde moitié (15a, 15b), chaque moitié comprenant une partie qui est perpendiculaire au panneau (3) et une partie de renforcement pliée (41, 42).

12. Dispositif de chauffage selon l'une quelconque des revendications précédentes, dans lequel le boîtier comprend un panneau arrière (27) formé d'un panneau de métal ondulé fixé à une plaque de métal plate et dans lequel ledit panneau arrière est monté dans le boîtier de sorte que l'air est emprisonné dans les zones entre les ondulations et la plaque de métal plate.

13. Procédé pour assembler un dispositif de chauffage selon l'une quelconque des revendications précédentes, comprenant les étapes suivantes :
assembler un ensemble (1) comprenant au moins un panneau d'émission de chaleur (3) et une source de chaleur (4, 6, 21), dans lequel la panneau et donc l'ensemble sont naturellement incurvés pour avoir une surface concave,
plier la surface concave vers l'arrière et placer les bords de l'ensemble dans les parties de retenue latérales d'un nombre de supports (2),
pousser l'ensemble dans la direction du corps longitudinal (15) des supports jusqu'à ce que l'ensemble s'encliquette en place ;
monter l'ensemble dans le boîtier en raccordant les supports (2) audit boîtier.
